# EUROPÄISCHE PATENTSCHRIFT

(11) **EP 2 297 677 B1**
(45) Veröffentlichungstag und Bekanntmachung des Hinweises auf die Patenterteilung: **11.03.2015**
(21) Anmeldenummer: 09772162.5
(22) Anmeldetag: 01.07.2009
(51) Int. Cl.: G06K 19/02, G06K 19/077, B41M 5/50

(54) **TRAGBARER DATENTRÄGER UND VERFAHREN ZUM HERSTELLEN DES DATENTRÄGERS**
PORTABLE DATA CARRIER AND METHOD FOR THE PRODUCTION OF THE DATA CARRIER
SUPPORT DE DONNÉES PORTATIF ET PROCÉDÉ DE FABRICATION DE CE SUPPORT DE DONNÉES

(30) Priorität: 02.07.2008 CN 200820068215 U
(43) Veröffentlichungstag der Anmeldung: 23.03.2011
(73) Patentinhaber: Giesecke & Devrient GmbH, 81677 München (DE)
(72) Erfinder: GUILIN, Sun, HuangShi Hubei Province 435000 (CN)
(86) Internationale Anmeldenummer: PCT/EP2009/004754
(87) Internationale Veröffentlichungsnummer: WO 2010/000462

(56) Entgegenhaltungen:
- EP-A1- 0 726 211
- DE-A1- 19 851 836
- FR-A- 2 825 744
- US-A1- 2007 257 797
- US-A1- 2008 106 002

## Beschreibung

Die Erfindung betrifft einen tragbaren Datenträger mit einem Kartenkörper, in welchem ein Chipmodul und eine Antenne zur Nahfeldkommunikation eingebracht sind sowie ein Verfahren zum Herstellen des Datenträgers. Der Datenträger, der beispielsweise eine Crystal Card ist, zeichnet sich durch eine hohe mechanische Stabilität mit hochglänzenden Oberflächen aus.

Tragbare Datenträger sind in verschiedenen Ausführungen auf dem Markt erhältlich, neuerdings auch als Bankkarten oder Nahverkehrstickets, beispielsweise für das sogenannte E-ticketing. Ein Beispiel für derartige Datenträger sind die sogenannten Crystal Cards, bei denen die äußere Form nicht mehr der einer klassischen rechteckigen Kredit/-Debitkarte entspricht. Alle diese Karten sind Multifunktionskarten auf denen Funktionen, wie beispielsweise elektronisches Bezahlen, implementiert werden. Dazu sind die Karten mit einem Chipmodul und einer Antenne ausgestattet, um über eine Nahfeldkommunikation mit einem Endgerät kommunizieren zu können. Eine Nahfeldkommunikation ist beispielsweise eine Kommunikation über das ISO/IEC 14443 Standardprotokoll.

Eine Crystal Card ist demnach ein tragbarer Datenträger mit der derartige Transaktionen ausgeführt werden können. Die Crystal Card ist dabei nicht in ihrer äußeren Form beschränkt, sehr kompakt, sehr leicht zu transportieren und aufgrund ihrer unbegrenzten äußeren Farb-, Oberflächen- und Formgestaltung mit steigender Beliebtheit bei potentiellen Kunden angenommen. Beispiele für eine derartige Crystal Card sind Schlüsselanhänger und digitale Münzträger. Die Kartenform ist dabei nicht beschränkt.

Für die individuelle Farbgestaltung werden die Kartenkörper derartiger tragbarer Datenträger mit einer Druckfarbschicht auf einer Polyvinylchlorid-, kurz PVC, Schicht oder als eine Art Sticker beklebt. Alternativ wird ein bedrucktes Kunststoffträgerpapier als Druckfarbschicht auf den Kartenkörper geklebt. Anschließend wird eine klarglasige,transparente Kunststoffschicht, bevorzugt ein Epoxydharz, über den Kartenkörper und die Druckfarbschicht gegossen, um das Innere des Datenträgers vor äußeren Einflüssen zu schützen. Die adhäsiven Kräfte derartiger Kleber zwischen Kartenkörper und Druckfarbschicht bzw. zwischen Druckfarbschicht und Kunststoffschicht sind allerdings so schwach, dass speziell bei Kunststoffschichten größer 0,5mm eine Delamination zwischen Kartenkörper und Druckfarbschicht bzw. zwischen Druckfarbschicht und Kunststoffschicht einsetzt. In der Folge fällt die schützende Kunststoffschicht ab, der Kartenkörper ist ab diesem Zeitpunkt ungeschützt.

Aus der US 2007/0257797 A1 ist ein tragbarer Datenträger in Kartenform mit einem Chipmodul und einer Antenne entnehmbar, dessen Kartenkörper eine erste und eine zweite Kartenkörperschicht aufweist, die durch eine Kleberschicht verbunden sind. Auf den Kartenkörper ist ein Druckmuster aufgebracht, darüber eine transparente Kunststoffschicht angeordnet. Zum Erhalt des fertigen Datenträgers wird der gesamte Schichtaufbau durch Heißlaminieren miteinander verbunden. Die bekannte Lösung bietet einen ausreichenden Schutz gegen Lamination, solange der gesamte Datenträger nicht zu dick ist. Bei Datenträgeraufbauten mit Außenschichten mit einer Dicke von 0,5 mm und darüber ist mit Delamination zu rechnen.

Aus der FR 2825744 A1 ist ein Datenträger bekannt, der in seinem Kartenkörper eine durchgehende Durchbohrung zur Befestigung z.B. an einem Schlüsselbund aufweist.

Aus der DE 198 51 836 A1 ist ein kartenförmiger Datenträger in Gestalt einer Chipkarte bekannt, die eine Trägerschicht aufweist, auf die eine Druckschicht und darüber eine transparente Folie aufgebracht ist. Die transparente Folie wird auf die mit der Druckschicht versehene Trägerschicht heiß auflaminiert.

Aus der US 2008/0106002 A1 ist ein mehrschichtiges laminiertes Identifikationsdokument bekannt, das eine laserbare Zwischenschicht aufweist, die zugleich als Verbindungsschicht fungiert.

Weiterhin wird in der EP 0 726 211 A1 eine wiederverwertbare Blisterverpackung mit einem Trägerelement und einer Blisterhaube offenbart. Die Blisterhaube wird mittels Blisterlack am Trägerelement befestigt.

Es ist Aufgabe der Erfindung, einen tragbaren Datenträger anzugeben, der einen guten Schutz gegen Delamination auch dann aufweist, wenn außen liegende Schichten Dicken von 0,5 mm und darüber besitzen.

Diese Aufgabe wird mit den in den unabhängig nebengeordneten Patentansprüchen beschriebenen Maßnahmen gelöst. Vorteilhafte Ausgestaltungen der Erfindung sind in den jeweils abhängigen Ansprüchen gezeigt.

Zur Lösung der Aufgabe wird eine neue Struktur eines tragbaren Datenträgers vorgeschlagen. Der tragbare Datenträger weist dazu einen Kartenkörper auf. In den Kartenkörper ist ein Chipmodul mit einer Antenne zur Nahfeldkommunikation eingebracht. Eine Druckfarbschicht ist auf einer Oberseite des Kartenkörpers aufgebracht. Auf die Druckfarbschicht ist eine Glanzlackschicht aufgebracht. Auf die Glanzlackschicht ist eine Kunststoffschicht aufgebracht, wobei die Kunststoffschicht transparent, in anderen Worten glasklar, ist und eine Schichtdicke größer 0,5 mm aufweist. Zusätzlich weist der Datenträger eine Durchbohrung an einer Stelle außerhalb des Bereichs der Antenne oder des Chipmoduls auf. Die Durchbohrung wird zum Tragen des Datenträgers, beispielsweise mittels eines Trageseiles, verwendet.

Durch den Glanzlack, im Englischen mit gloss oil oder varnish bezeichnet, als eine Art Bindemittel entstehen nach der Fertigung des Datenträgers adhäsive Kräfte, die die dicke Kunststoffschicht und die Druckfarbschicht derart zusammenhalten, dass eine Delamination nicht mehr erfolgt. Der Datenträger ist somit um ein Vielfaches stabiler, als mit den Klebemitteln aus dem Stand der Technik. Als Beispiel für einen derartigen Glanzlack ist der Typ S4679 oder S4767 der Firma British Apollo Company genannt. Die Glanzlackschicht ist bevorzugt nach dem Austrocknen hochglänzend, sodass ein Glitzer- bzw. Glanzeffekt auf der Oberseite des tragbaren Datenträgers entsteht.

Alternativ ist der soeben beschriebene Schichtenaufbau einseitig oder beidseitig auf dem Kartenkörper aufgebracht. Durch diesen Aufbau ist eine zweiseitige Farbgestaltung des tragbaren Datenträgers erreicht.

In einer vorteilhaften Ausgestaltung ist zwischen der Oberseite des Kartenkörpers und der Druckfarbschicht eine Basisglanzlackschicht eingebracht. Durch diesen Aufbau wird erreicht, dass der Glanzlack als eine Art Bindemittel sowohl für die dicke Kunststoffschicht als auch die Druckfarbschicht eingesetzt wird, wodurch eine Steigerung der adhäsiven Kräfte zwischen dem Kartenkörper und der Druckfarbschicht erzielt ist.

Bevorzugt ist die Druckfarbschicht eine Offsetdruckschicht oder eine Siebdruckschicht, sodass eine Beschichtung des Kartenkörpers kostengünstig, schnell und mit einer hohen Auflösung erfolgt.

In einer bevorzugten Ausgestaltung ist der Kartenkörper mehrschichtig aufgebaut. Ein derartiger Aufbau ist beispielsweise der Sandwich-Aufbau. In einer Kartenantennenschicht wird dazu die Antenne zur Nahfeldkommunikation eingesetzt. Im Sandwich-Verfahren wird die Kartenantennenschicht von zwei Kartenbasisschichten eingeschlossen. Das Material des Kartenkörpers ist bevorzugt weiß oder farbig, um eine individuelle Farbgestaltung zu ermöglichen. Das Material des mehrschichtigen Kartenkörpers ist bevorzugt Polyvinylchlorid, kurz PVC, Polyethylenterephthalat, kurz PET, und/oder Acrylnitril-Butadien-Styrol, kurz ABS.

Durch das mehrschichtige Aufbauen und dem anschließenden Wärmeeinfluss bei der Weiterverarbeitung, sprich dem Laminieren des Schichtenaufbaus oder dem Erhitzen des Datenträgers zum Aushärten der Kunststoffschicht, wird der Kartenkörper monolithisch, sodass ein hohes Maß an Stabilität bei minimalen Herstellungskosten erzielt ist.

Bevorzugt ist die Kunststoffschicht eine Epoxydharzlösung, die nach Aushärten einen optimalen Schutz sowie eine transparente, englisch crystal, Oberfläche für den Datenträger darstellt.

Im Erfindungsgedanken ist weiterhin ein Verfahren zur Herstellung eines tragbaren Datenträgers enthalten. Der Datenträger weist dazu einen Kartenkörper mit eingebrachter Antenne und Chipmodul zur Nahfeldkommunikation auf. Zunächst wird eine Oberseite des Katenkörpers mit einer Druckfarbe beschichtet. Anschließend wird die Druckfarbe mit einem Glanzlack beschichtet. Im Anschluss wird der Kartenkörper mit der Druckfarbschicht und dem Glanzlack laminiert. Mit Laminieren wird hierbei das Erhitzen und Pressen des Datenträgers verstanden, sodass der Schichtaufbau des Datenträgers miteinander verbunden wird. In der Folge wird der Glanzlack mit einer Kunststoffschicht beschichtet, wobei die Kunststoffschicht dicker als 0,5 mm ist. Mittels eines Ofens wird der tragbare Datenträger erhitzt, sodass die Kunststoffschicht aushärtet. Nach dem Aushärten ist die Kunststoffschicht glasklar, mit anderen Worten transparent.

Alternativ ist der Kartenkörper ein mehrschichtiges PVC Material. Dieser mehrschichtige Kartenkörper wird durch die Wärmeeinwirkungen beim Laminieren bzw. dem Erhitzen im Ofen monolithisch und weist dadurch eine hohe Stabilität bei vereinfachter Herstellung auf.

Alternativ wird vor dem Beschichten der Oberseite des Kartenkörpers mit Druckfarbe ein Beschichten mittels eines Basisglanzlacks durchgeführt. Dadurch werden am Ende des Herstellungsprozesses die adhäsiven Kräfte zwischen Kartenkörper und Druckfarbschicht sehr groß sein, sodass eine Delamination nicht erfolgen kann. Alternativ wird der erhaltene Schichtaufbau auf dem Kartenkörper vor dem Laminieren mittels eines Punktschweißens grob fixiert. Die Fixierung kann auch alternativ erfolgen.

Alternativ wird das Chipmodul erst vor dem Fixieren in den Kartenkörpers eingebracht, um das Chipmodul vor dem Beschichten mittels Glanzlack und Druckfarbe zu schützen.

Bevorzugt erfolgt das Herstellen in einer Vielzahl von tragbaren Datenträgern, wobei die einzelnen Kartenkörper alle von einem einzigen Werkstück gefertigt werden und erst nach dem Laminieren mittels Stanzen vereinzelt werden. Dazu wird ein einzelnes PVC- Band als Basis-Kartenkörper bearbeitet, beschichtet und gemäß dem beschriebenen Verfahren behandelt und erst nach dem Laminieren der einzelnen Schichten auf dem PVC-Band werden die einzelnen Kartenkörper ausgestanzt. Bevorzugt erfolgt ein Nachbearbeiten im Anschluss des Teilens der Kartenkörper vom PVC-Band. Das Nachbearbeiten ist beispielsweise ein Feinstanzen oder ein andersartiges in Form bringen des Datenträgers, sodass die gewünschte Endform erhalten wird.

Abschließend erfolgt das Einbringen eines Loches in den Datenträger an einer Stelle außerhalb der Antenne oder des Chipmoduls.

Nachfolgend wird anhand von Figuren die Erfindung beispielhaft näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
- Figur 1: Querschnitt eines erfindungsgemäßen tragbaren Datenträgers,
- Figur 2: Draufsicht auf eine Kartenkörperantennenschicht eines Datenträgers nach Figur 1,
- Figur 3: Alternative Ausgestaltung eines in Figur 1 dargestellten Datenträgers
- Figur 4: Verfahrensablaufdiagramm eines erfindungsgemäßen Verfahrens

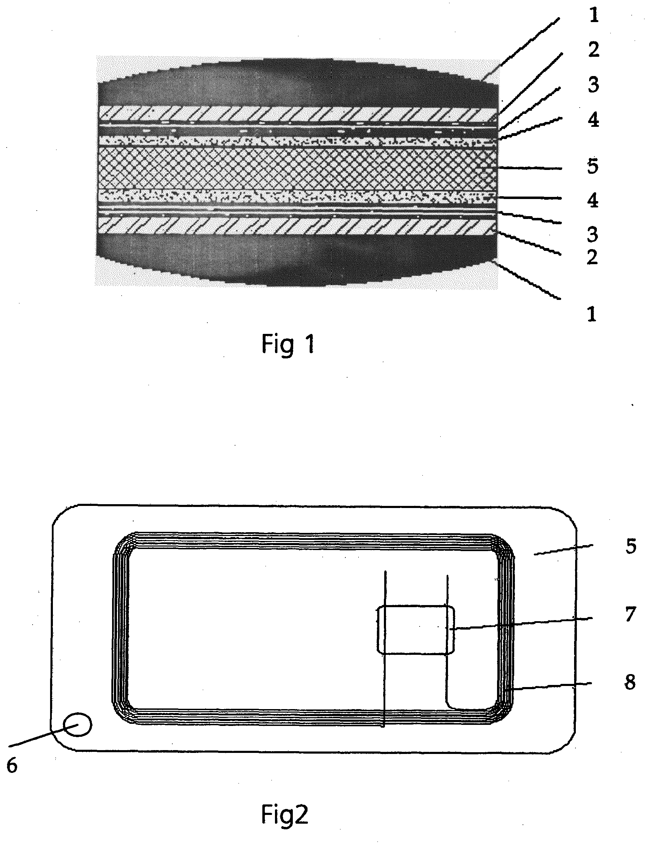

In Figur 1 ist ein Querschnitt eines erfindungsgemäßen tragbaren Datenträgers dargestellt, wie er beispielsweise bei Crystal Cards vorgesehen ist. Im Inneren des Datenträgers ist ein Kartenkörper 5 dargestellt. In diesem, hier einschichtigen, Kartenkörper 5 ist eine Antenne 8 und ein Chipmodul 7 (nicht dargestellt) eingebracht. Das Einbringen kann ein Einbetten oder ein Aufdrucken der Antenne 8 auf den Kartenkörper sein. Die Antenne 8 und das Chipmodul 7 sind ausgebildet, um über Nahfeldkommunikation mit einem Endgerät Daten und Informationen auszutauschen.

Auf beiden Oberseiten des Kartenkörpers 5 ist ein Basisglanzlack 4 aufgebracht. Der Basisglanzlack ist in dieser Ausführungsform eine Art Bindemittel. Dieser Glanzlack baut sehr gute adhäsive Kräfte zwischen dem Kartenkörper 5 und der darüberliegenden Druckfarbschicht 3 auf. Ein Delaminieren der Druckfarbschicht 3 und dem Kartenkörper 5 wird hierdurch sehr gut unterbunden. Als Glanzlack ist in dieser Ausführung das S2871 Bindemittel der Firma British Apollo verwendet. Es ist bevorzugt für PVC-Kartenkörper, beispielsweise A1.1 PVC, B1.1PVC und B9.22PVC, zu verwenden, aber ist alternativ auch für PET und ABS Kartenkörper einsetzbar. Der Glanzlack trocknet verhältnismäßig schnell und schützt darüber hinaus den Kartenkörper 5.

Die Druckfarbschicht 3 ist entweder durch ein Offset-Druckverfahren oder ein Siebdruckverfahren auf den Kartenkörper 5 aufgebracht. Ist die Druckfarbschicht 3 angetrocknet, wird oberhalb der Druckfarbschicht 3 eine Glanzlack 2 aufgebracht. Dieser Glanzlack ist in dieser Ausführung vom Typ S4767 oder S4679 der Firma Apollo. Beide Glanzlacktypen zeichnen sich durch das Aufbauen hoher adhäsiver Kräfte nach der Fertigstellung des Datenträgers aus. Weiterhin sind die Glanzlacke hochglänzend, d.h. sie weisen einen hohen Grad an Glätte auf. Dadurch entstehen zusatzliche Farbglanzeffekte.

Oberhalb der Glanzlackschicht 2 wird eine dicke Kunststoffschicht 1, bevorzugt ein Epoxydharz mit einer Dicke größer 0,5mm aufgetragen. Das Epoxydharz ist beispielsweise Bisphenol-A Epoxydharz. Die Kunststoffschicht 1 wird in der Literatur in Verbindung mit Crystal Cards als Crystal-Plastic-Schicht 1 bezeichnet.

Durch Verwenden eines Epoxydharz als Kunststoffschicht 1 ist die Formgestaltung des Datenträgers frei gestaltbar, sodass beispielsweise Krümmungen der Oberfläche und Abrundungen an den Seitenrändern möglich sind, wie in Figur 1 dargestellt.

In Figur 2 ist eine Draufsicht auf einen Kartenkörper 5 dargestellt. Hierbei ist ein Chipmodul 7 in den Kartenkörper 5 eingebracht und elektrisch leitend mit einer Antenne 8 verbunden. Die Antenne 8 ist mittels eines Druckverfahrens auf den Kartenkörper eingebracht oder alternativ mittels Sandwich-Verfahren eingebracht. Die Antenne 8 und das Chipmodul 7 sind zur Nahfeldkommunikation über ISO/IEC 14443 ausgestaltet. Weiterhin ist im Kartenkörper 5 ein Loch 6 eingebracht. Dieses Loch 6 ist durch alle Schichten des Datenträgers hindurchgehend und an einer Stelle im Datenträger außerhalb des Bereichs der Antenne 8 oder des Chipmoduls 7 eingebracht. Dadurch wird die Funktion von Antenne 8 und Chipmodul 7 sichergestellt. Das Loch 6 dient dazu, eine Transporteinrichtung, beispielsweise ein Transportband, Gummiband oder dergleichen mehr, an dem Datenträger zu befestigen, sodass der Datenträger, beispielsweise in Forme eines Schlüsselanhängers, Umhängens, Kette oder einer Art digitalen Münze, leicht und sicher im Alltag zu transportieren ist.

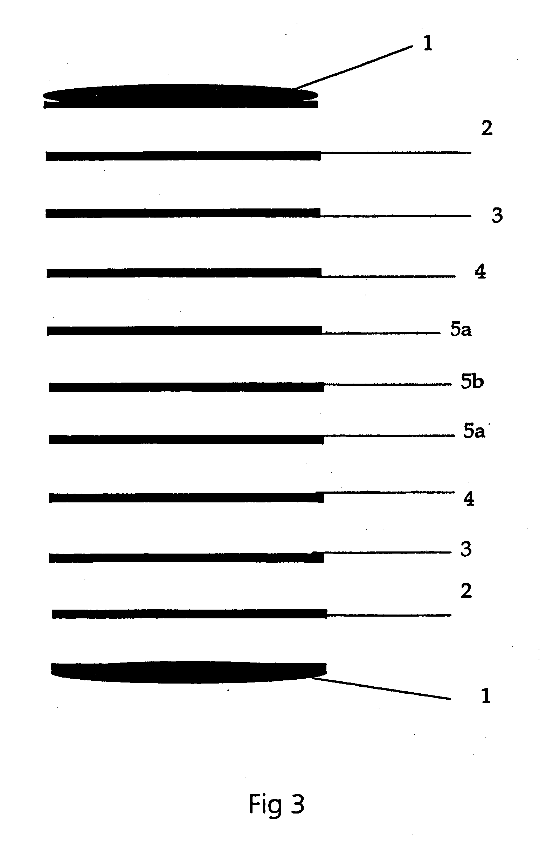

In Figur 3 ist eine alternative Ausführung des in Figur 1 dargestellten Datenträgers gezeigt. Der Aufbau des Datenträgers aus Figur 3 gleicht dabei stark dem Datenträger aus Figur 1, sodass im Folgenden nur auf die Unterschiede zwischen beiden Figuren eingegangen wird. Im Unterschied zu Figur 1 weist der Datenträger der Figur 3 einen mehrschichtigen Kartenkörper 5 auf. Dieser Mehrschichtkartenkörper wird auch als Sandwich-Aufbau bezeichnet. Hierbei ist eine Kartenkörperantennenschicht 5b in zwei Kartenkörperbasisschichten 5a eingebracht. Da beide Schichten 5a und 5b aus einem PVC, PET oder ABS Material bestehen werden sie unter Einwirken von Wärme monolithisch, d.h. die Teilschichten 5a, 5b des Karten verschmelzen zu einem Kartenkörper 5. Vorteil des Mehrschichtaufbaus ist das kostengünstigere Einbringen von Antenne 8 und Chipmodul 7 und Steigerung der Stabilität des Datenträgers.

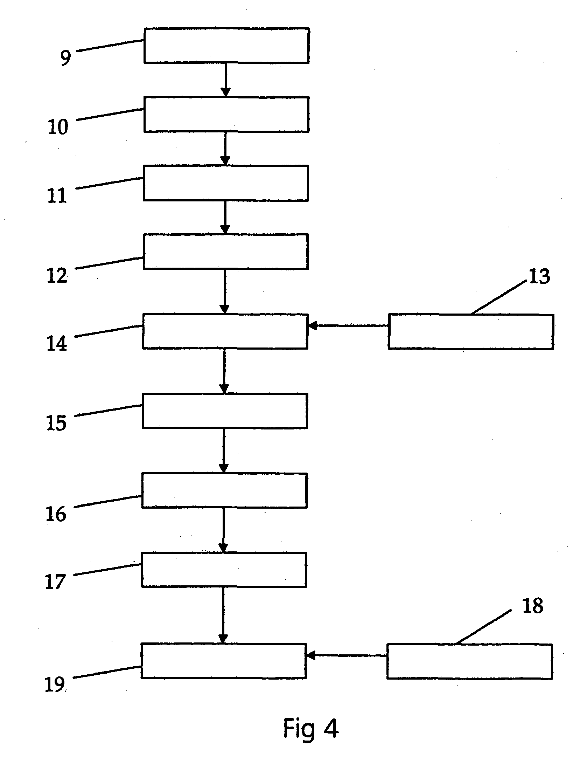

In Figur 4 ist ein Verfahrensablaufdiagramm des erfindungsgemäßen Verfahrens dargestellt. In der Tabelle 1 sind zu einzelnen Verfahrensschritten detaillierte Angaben bezüglich optimierter Parameter angegeben. Zunächst erfolgt das Herstellen des Kartenkörpers 9. Dazu wird bevorzugt A1.1 PVC, B 1.1 PVC, B9.22 PVC verwendet. In den Kartenkörper wird die Antenne 8 eingebracht. Im Folgenden wird eine Druckfarbschicht in Siebdruckverfahren aufgebracht. Für den Siebdruck wird ein feinmaschiges Siebdrucknetzes beidseitig auf den Kartenkörper 5 aufgebracht. Anschließend erfolgt im Schritt 11 das beidseitige Aufbringen der Druckfarbe mittels Siebdrucktechnik oder Offsetdruckverfahren. Da beide Verfahren bekannt sind, wird auf Einzelheiten der Druckverfahren hier nicht näher eingegangen. Zwischen dem Schritt 9 und 10 ist es denkbar, dass ein Glanzlack vom Typ S2871 der Fa. Apollo eingebracht wird, um die Druckfarbschicht stärker adhäsiv an den Kartenkörper zu binden. Ist die Druckfarbschicht angetrocknet, so wird im Verfahrensschritt 12 mittels Siebdrucktechnik beidseitig der Glanzlack vom Typ S4767 oder Typ 4679 aufgebracht. Im Schritt 13 wird das Chipmodul 7 in den Kartenkörper eingebracht. Alternativ ist das Chipmodul 7 bereits im Kartenkörper 5 integriert, bevor Verfahrensschritt 10 angewendet wird.

Anschließend erfolgt im Verfahrensschritt 14 ein grobes Fixieren des Schichtaufbaus mittels Punktschweißens. Alternatives Fixieren ist ebenfalls denkbar. Zur Vereinfachung des Verfahrens kann auf das Fixieren gegebenenfalls verzichtet werden. Der Vorteil des Fixierens besteht darin, dass eine Positionsänderung der Schichten nicht mehr möglich ist. Daran anschließend wird im Verfahrensschritt 15 Druckfarbschicht 3, Basisglanzlackschicht 4, Glanzlackschicht 2 und Kartenkörper 5 laminiert. Mit Laminieren ist hier das Erhitzen und Pressen des Datenträgers mit den in Tabelle 1 beispielhaft verwendeten Parametern verstanden. Im Folgeschritt 16 werden mit einem ID-1 die-cutting die halbfertigen Datenträger, die bevorzugt in einer Vielzahl hergestellt werden, vereinzelt. Konkret bedeutet das, dass mittels eines Stanzverfahrens die einzelnen Datenträger aus einem einstückigen Werkstück, beispielsweise einem dünnen PVC-Band gestanzt werden. Anschließend werden mit einem sogenannten Allotypic die-cutting Verfahren 17 die einzelnen laminierten halbfertigen Datenträger nachbearbeitet. Mit Nachbearbeiten ist beispielsweise ein Feinstanzen oder Feinzuschneiden zu verstehen. Anschließend wird im Schritt 18 das Epoxydharz für die aufzubringende Kunststoffschicht vorbereitet. Im Wesentlichen wird darunter das Erwärmen des Epoxydharzes, welches die Kunststoffschicht bildet, verstanden. Als Typ wird hier das Bisphenol vom Typ A oder B vorgeschlagen. Die Kunststoffschicht wird bevorzugt eine Dicke von mehr als 0,5mm aufweisen.

Das erwärmte Epoxydharz wird auf den halbfertigen Datenträger aufgebracht. Anschließend wird der Datenträger in einem Ofen erhitzt, sodass das Epoxydharz aushärtet. Nach Aushärten ist die Kunststoffschicht transparent, also glasklar. Ist der Kartenkörper 5 mehrschichtig, so wird dieser im Ofen zu einem monolithischen Kartenkörper 5 durch verschmelzen der einzelnen Schichten 5a und 5b.

In der folgenden Tabelle 1 sind beispielhaft Geräte und optimierte Parameter für wichtige Teilschritte des Verfahrens angegeben.

**Tabelle 1**

| Nr. | Gerätename | Verfahren | Optimale Parameter |
|---|---|---|---|
| 11 | RP74 | Aufbringen der Druckfarbe | - Druckgeschwindigkeit: 4000 Blätter pro Stunde |
| | | | - Trockenenergie 120W/cm |
| 11,12 | WPT1020A | Aufbringen des Glanzlacks oder des Farbdrucks mittels Siebdruckverfahren | - Druckgeschwindigkeit: 1000 Blätter pro Stunde |
| | | | - Trockentemperatur: 38 - 42°C |
| 15 | CHK 120/240 | Laminieren | - Temperatur:130 150°C, |
| | | | - Druck: 50 - 90bar |
| 16 | LOUDA | Grobes Zuschneiden | |
| 17 | SIM-PM | Feines Zuschneiden | |
| 19 | Ofen | Aufbringen der Kunststoffschicht | - Temperatur: 45 - 50, |
| | | | - Zeit zum Aushärten: 4 Stunden |

### Bezugszeichenliste

- 1: Kunststoffschicht, Epoxydharz, Dicke größer 0,5mm
- 2: Bindemittelschicht, Glanzlack (S4679, S4767)
- 3: Druckfarbschicht,
- 4: Basisbindemittelschicht, Glanzlack (S2871)
- 5: Kartenkörper
- 5a: Kartenkörperbasisschicht, PVC
- 5b: Kartenkörperantennenschicht, PVC
- 6: Durchbohrung, Loch
- 7: Chipmodul
- 8: Antenne für Nahfeldkommunikation
- 9: Herstellen des Kartenkörpers
- 10: Aufbringen des Siebdrucknetzes auf Kartenkörper (beidseitig)
- 11: Aufbringen der Druckfarbe mittels Siebdrucktechnik (beidseitig)
- 12: Beschichten mit Glanzlack mittels Siebdrucktechnik (beidseitig)
- 13: Einbringen des Chipmoduls
- 14: Punktschweißen
- 15: Laminieren
- 16: Grobes Zuschneiden
- 17: Feines Zuschneiden
- 18: Vorbereitung des Kunststoffes für die Kunststoffschicht
- 19: Aufbringen des vorbereiteten Kunststoffes (beidseitig)

## Patentansprüche

1. Tragbarer Datenträger mit einem monolithischen einschichtigen oder mehrschichtigen Kartenkörper (5), aufweisend:
- ein Chipmodul (7) mit einer Antenne (8) zur Nahfeldkommunikation, welche im Kartenkörper (5) eingebracht sind,
- eine Druckfarbschicht (3) auf einer Oberseite des Kartenkörpers (5),
- einer hochglänzenden Glanzlackschicht (2) auf der Druckfarbschicht (3), wodurch Farbglanzeffekte entstehen,
- eine Kunststoffschicht (1) auf der Glanzlackschicht (2), wobei die Kunststoffschicht (1) transparent ist und eine Schichtdicke größer 0,5 mm aufweist sowie
- eine Durchbohrung (6) im Datenträger an einer Stelle außerhalb des Bereichs der Antenne (8) oder des Chipmoduls (7) und wobei die Durchbohrung (6) zum Tragen des Datenträgers verwendbar ist.

2. Tragbarer Datenträger nach Anspruch 1, wobei die Druckfarbschicht (3) einseitig oder beidseitig auf dem Kartenkörper (5) aufgebracht ist.

3. Tragbarer Datenträger nach Anspruch 1 oder 2, wobei zwischen der Oberseite des Kartenkörpers (5) und der Druckfarbschicht (3) eine Basisglanzlackschicht (4) eingebracht ist.

4. Tragbarer Datenträger nach einem der vorhergehenden Ansprüche, wobei die Druckfarbschicht (3) eine Offsetdruckschicht oder eine Siebdruckschicht ist.

5. Tragbarer Datenträger nach einem der vorhergehenden Ansprüche, wobei der Kartenkörper (5):
- mehrere Schichten (5a, 5b)aufweist,
- das Material des Kartenkörpers (5) weiß oder farbig ist,
- das Material PVC, PET und ABS ist, und
- die Schichten (5a, 5b) monolithisch verschmolzen sind.

6. Tragbarer Datenträger nach einem der vorhergehenden Ansprüche, wobei die Kunststoffschicht (1) ein Epoxydharz ist.

7. Verfahren zum Herstellen eines tragbaren Datenträgers, wobei der Datenträger einen monolithischen Kartenkörper (5) mit eingebrachter Antenne (8) und Chipmodul (7) zur Nahfeldkommunikation aufweist, mit den Verfahrensschritten:
- Beschichten einer Oberseite des Kartenkörpers (5) mit einer Druckfarbe (3);
- Beschichten der Druckfarbe (3) mit einer hochglänzenden Glanzlackschicht (2), wodurch Farbglanzeffekte entstehen;
- Laminieren des Kartenkörpers (5) mit der Druckfarbschicht (3) und der Glanzlackschicht (2);
- Beschichten der Glanzlackschicht (2) mit einer Kunststoffschicht (1), wobei die Kunststoffschicht (1) dicker als 0,5 mm ist und
- Erhitzen des tragbaren Datenträgers zum Aushärten der Kunststoffschicht (1), wobei die Kunststoffschicht nach dem Aushärten transparent ist.

8. Verfahren nach Anspruch 7, wobei der Kartenkörper (5) ein mehrschichtiges PVC Material (5a, 5b) ist und dieses PVC-Material unter der Wärmeeinwirkung monolithisch wird.

9. Verfahren nach einem der Ansprüche 7 oder 8, wobei vor dem Beschichten der Oberseite mit Druckfarbe (3) ein Beschichten mittels eines glarlackartigen Basisglanzlacks (2) erfolgt.

10. Verfahren nach einem der Ansprüche 7 bis 9, wobei ein Loch (6) an einer Stelle außerhalb des Bereiches der Antenne (8) oder des Chipmoduls (7) in den Datenträger eingebracht wird.

11. Verfahren nach einem der Ansprüche 7 bis 10, wobei der Datenträger vor dem Laminieren mittels Punktschweißens fixiert wird.

12. Verfahren zum Herstellen einer Vielzahl von tragbaren Datenträgern nach einem der Verfahren gemäß den Ansprüchen 7 bis 11, wobei die einzelnen Kartenkörper (5) alle von einem einzigen Werkstück gefertigt werden und erst nach dem Laminieren mittels Stanzen vereinzelt werden.

13. Verfahren nach Anspruch 12, wobei nach dem Vereinzeln die endgültige Form des Datenträgers mittels Feinstanzen erzielt wird.

## Claims

1. A portable data carrier with a monolithic single-layer or multilayer card body (5), having:
- a chip module (7) with an antenna (8) for near-field communication which are incorporated in the card body (5),
- a printing ink layer (3) on an upper side of the card body (5),
- a high-gloss gloss lacquer layer (2) on the printing ink layer (3), thereby giving rise to color gloss effects,
- a plastic layer (1) on the gloss lacquer layer (2), wherein the plastic layer (1) is transparent and has a layer thickness greater than 0.5 mm, and
- a through bore (6) in the data carrier at a place outside the area of the antenna (8) or the chip module (7), and wherein the through bore (6) is employable for carrying the data carrier.

2. The portable data carrier according to claim 1, wherein the printing ink layer (3) is applied to the card body (5) on one side or on both sides.

3. The portable data carrier according to claim 1 or 2, wherein between the upper side of the card body (5) and the printing ink layer (3) there is incorporated a base gloss lacquer layer (4).

4. The portable data carrier according to any of the preceding claims, wherein the printing ink layer (3) is an offset printed layer or a screen printed layer.

5. The portable data carrier according to any of the preceding claims, wherein the card body (5):
- has several layers (5a, 5b),
- the material of the card body (5) is white or colored, and
- the material is PVC, PET and ABS, and
- the layers (5a, 5b) are monolithically fused.

6. The portable data carrier according to any of the preceding claims, wherein the plastic layer (1) is an epoxy resin.

7. A method for manufacturing a portable data carrier, wherein the data carrier has a monolithic card body (5) with incorporated antenna (8) and chip module (7) for near-field communication, having the method steps of:
- coating an upper side of the card body (5) with a printing ink (3);
- coating the printing ink (3) with a high-gloss gloss lacquer layer (2), thereby giving rise to color gloss effects;
- laminating the card body (5) with the printing ink layer (3) and the gloss lacquer layer (2);
- coating the gloss lacquer layer (2) with a plastic layer (1), wherein the plastic layer (1) is thicker than 0.5 mm, and
- heating the portable data carrier for curing the plastic layer (1), wherein the plastic layer is transparent after curing.

8. The method according to claim 7, wherein the card body (5) is a multilayer PVC material (5a, 5b) and this PVC material becomes monolithic under the action of heat.

9. The method according to either of the claims 7 to 8, wherein before the coating of the upper side with printing ink (3) there is effected a coating by means of a gloss lacquer-like base gloss lacquer (2).

10. The method according to any of the claims 7 to 9, wherein a hole (6) is incorporated in the data carrier at a place outside the area of the antenna (8) or the chip module (7).

11. The method according to any of the claims 7 to 10, wherein the data carrier is fixed by means of spot welding before lamination.

12. A method for manufacturing a multiplicity of portable data carriers according to any of the methods according to claims 7 to 11, wherein the individual card bodies (5) are all manufactured from a single workpiece and are singled by means of punching only after lamination.

13. The method according to claim 12, wherein the final shape of the data carrier is achieved by means of fine blanking after singling.

## Revendications

1. Support de données portable comprenant un corps de carte (5) monolithique monocouche ou multicouche, comportant:
• un module puce (7) ayant une antenne (8) pour la communication à champ proche, lesquels sont incorporés dans le corps de carte (5),
• une couche d'encre d'impression (3) sur une face de dessus du corps de carte (5),
• une couche de vernis brillant (2) très brillante sur la couche d'encre d'impression (3), engendrant des effets de brillance des couleurs,
• une couche de matière plastique (1) sur la couche de vernis brillant (2), la couche de matière plastique (1) étant transparente et présentant une épaisseur de couche supérieure à 0,5 mm, ainsi que
• un perçage traversant (6) dans le support de données à un endroit situé à l'extérieur de la zone de l'antenne (8) ou du module puce (7), et le perçage traversant (6) étant utilisable pour porter le support de données.

2. Support de données portable selon la revendication 1, la couche d'encre d'impression (3) étant appliquée sur une ou sur les deux faces du corps de carte (5).

3. Support de données portable selon la revendication 1 ou 2, une couche de vernis brillant (4) de base étant incorporée entre la face de dessus du corps de carte (5) et la couche d'encre d'impression (3).

4. Support de données portable selon une des revendications précédentes, la couche d'encre d'impression (3) étant une couche d'impression offset ou une couche sérigraphiée.

5. Support de données portable selon une des revendications précédentes, le corps de carte (5):
• comportant plusieurs couches (5a, 5b),
• le matériau du corps de carte (5) étant blanc ou coloré,
• le matériau étant du PVC, PET et ABS, et
• les couches (5a, 5b) étant monolithiquement fusionnées.

6. Support de données portable selon une des revendications précédentes, la couche de matière plastique (1) étant une résine époxyde.

7. Procédé de fabrication d'un support de données portable, le support de données comportant un corps de carte (5) monolithique ayant une antenne (8) incorporée et un module puce (7) pour la communication à champ proche, comprenant les étapes:
• revêtement d'une face de dessus du corps de carte (5) avec une encre d'impression (3);
• revêtement de l'encre d'impression (3) avec une couche de vernis brillant (2) très brillante , ce qui engendre des effets de brillance des couleurs;
• laminage du corps de carte (5) doté de la couche d'encre d'impression (3) et de la couche de vernis brillant (2);
• revêtement de la couche de vernis brillant (2) avec une couche de matière plastique (1), la couche de matière plastique (1) ayant une épaisseur supérieure à 0,5 mm et
• chauffage du support de données portable pour faire durcir la couche de matière plastique (1), la couche de matière plastique étant transparente après le durcissement.

8. Procédé selon la revendication 7, le corps de carte (5) étant un matériau PVC multicouche (5a, 5b) et ce matériau PVC devenant monolithique sous l'effet de la chaleur.

9. Procédé selon une des revendications 7 ou 8, dans lequel, avant le revêtement de la face de dessus avec de l'encre d'impression (3), un revêtement au moyen d'un vernis brillant (2) de base à brillance laquée a lieu.

10. Procédé selon une des revendications de 7 à 9, un trou (6) étant, à une endroit situé à l'extérieur de la zone de l'antenne (8) ou du module puce (7), pratiqué dans le support de données.

11. Procédé selon une des revendications de 7 à 10, le support de données étant, avant le laminage, fixé par soudage par points.

12. Procédé de fabrication d'une pluralité de supports de données portables selon un des procédés selon les revendications de 7 à 11, les différents corps de carte (5) étant tous usinés à partir d'une même pièce d'oeuvre et étant séparés seulement après le laminage, par découpage.

13. Procédé selon la revendication 12, dans lequel, après la séparation, la forme définitive du support de données est obtenue par découpage fin.
